# EUROPÄISCHE PATENTANMELDUNG

(11) **EP 3 812 190 A1**
(43) Veröffentlichungstag der Anmeldung: **28.04.2021**
(21) Anmeldenummer: 20198097.6
(22) Anmeldetag: 24.09.2020
(51) Int. Cl.: B60K 6/445, B60K 6/38

(54) **GETRIEBEANORDNUNG**

(30) Priorität: 24.10.2019 DE 102019216407
(71) Anmelder: Deere & Company, Moline, IL 61265 (US)
(72) Erfinder: Meid, Michael, 68163 Mannheim (DE); Billich, Manuel, 68163 Mannheim (DE)
(74) Vertreter: Dehnhardt, Florian Christopher

(57) **Zusammenfassung**

Die Erfindung betrifft eine Getriebeanordnung (10) für ein Fahrzeug mit einem Eingangsgetriebe (18), welches eine erste Eingangswelle (24) aufweist, mit einem Basisgetriebe (22), welches in Kraftflussrichtung (20) dem Eingangsgetriebe (18) nachgeschaltet ist und mit einer Antriebseinheit (15) zum Aufprägen einer Drehzahl auf eine Antriebswelle (28), welche mit einer zweiten Eingangswelle (30) des Eingangsgetriebes (18) in Antriebsverbindung steht. Eine Sperrvorrichtung (46) ist zur drehfesten Blockierung der zweiten Eingangswelle (30) in eine Sperrposition überführbar.

## Beschreibung

Die Erfindung betrifft eine Getriebeanordnung für ein Fahrzeug.

Im Stand der Technik sind Getriebeanordnungen für landwirtschaftliche Arbeitsfahrzeuge bekannt, die mehrere hintereinander angeordnete Getriebeeinheiten aufweisen. Derartige Getriebeanordnungen dienen u.a. dazu, den hohen Anforderungen in Bezug auf eine möglichst feinstufige aber auch weite Spreizung des Getriebes gerecht zu werden. Solche Getriebeanordnungen können mit einer elektrischen Antriebseinheit gekoppelt sein. Stufenlose leistungsverzweigte Getriebe bieten ein Höchstmaß an Flexibilität zwischen Eingangsdrehzahl und Ausgangsdrehzahl. Dies wird durch eine Überlagerung der Drehzahlen (z.B. mit Planetensätzen) zweier unterschiedlicher Leistungspfade erzielt. Ein Leistungspfad weist dabei eine von der Antriebsdrehzahl veränderliche Ausgangsdrehzahl auf und wird der eigentlichen Antriebsdrehzahl überlagert.

Der vorliegenden Erfindung liegt die Aufgabe zugrunde, eine Funktionalität der Getriebeanordnung auch für den Fall eines Fehlers in der Betriebsweise der Antriebseinheit aufrechtzuerhalten.

Diese Aufgabe wird durch eine Getriebeanordnung mit den Merkmalen des Patentanspruchs 1 gelöst.

Weitere vorteilhafte Ausgestaltungen der erfindungsgemäßen Getriebeanordnung gehen aus den Unteransprüchen hervor.

Gemäß Patentanspruch 1 enthält die Getriebeanordnung ein Eingangsgetriebe, ein dem Eingangsgetriebe in Kraftflussrichtung nachgeschaltetes Basisgetriebe und eine Antriebseinheit. Das Eingangsgetriebe weist eine erste Eingangswelle auf. Sie dient vorzugsweise zur Aufnahme der Leistung eines Verbrennungsmotors. Insbesondere wird an der ersten Eingangswelle eine Drehzahl eines Verbrennungsmotors bereitgestellt. Hierzu ist die erste Eingangswelle vorzugsweise mit der Kurbelwelle des Verbrennungsmotors gekoppelt. Darüber hinaus ist die erste Eingangswelle vorzugsweise direkt mit der Antriebseinheit über ein festes Übersetzungsverhältnis verbunden.

Die Antriebseinheit prägt einer Antriebswelle eine Drehzahl auf, wobei diese Antriebswelle mit einer zweiten Eingangswelle des Eingangsgetriebes in Antriebsverbindung steht. Weiterhin ist eine Sperrvorrichtung vorgesehen, welche zur drehfesten Blockierung der zweiten Eingangswelle in eine Sperrposition überführbar ist. Wenn sich die Sperrvorrichtung in ihrer Sperrposition befindet, bewirkt sie eine drehfeste Blockierung der zweiten Eingangswelle, wodurch sich letztere in einer Blockierposition befindet. Die drehfeste Blockierung der zweiten Eingangswelle wirkt sich vorteilhaft bei einem Zustand aus, bei dem die Antriebseinheit aufgrund eines Fehlerzustands bzw. technischen Defektes kein Drehmoment mehr generieren kann, um mechanische Energie zu dem Basisgetriebe zu übertragen.

Um in einem solchen Fehlerzustand bzw. Fehlerfall einen etwaigen vollständigen Funktionsausfall der Getriebeanordnung zu vermeiden, wird die zweite Eingangswelle blockiert. Hierdurch wird ein einziges, festes Übersetzungsverhältnis des Eingangsgetriebes hergestellt. Infolgedessen wird die Getriebeanordnung im Falle eines Fehlerzustandes (z.B. eines elektrischen Defektes bei einer elektrisch ausgebildeten Antriebseinheit) automatisch in ein Getriebe mit derselben Anzahl Gangstufen umgewandelt, wie sie das Basisgetriebe selbst aufweist.

Mit anderen Worten wird im Fehlerfall automatisch ein festes Übersetzungsverhältnis bzw. eine einzige Drehzahlstufe im Eingangsgetriebe hergestellt. Kombiniert mit dem Basisgetriebe ist es hierdurch möglich, die Getriebeanordnung im Fehlerfall zumindest in einem Not-Antriebsmodus weiter zu betreiben und folglich für das Fahrzeug einen Not-Fahrbetrieb aufrechtzuerhalten. Insbesondere ist das Fahrzeug dann zumindest anfahrfähig.

Mit dem Begriff "Fehlerzustand" sind unterschiedliche technische Fehler bzw. Defekte vorstellbar. Es kann sich beispielsweise um einen Fehler in der Antriebseinheit selbst (z.B. elektrische Stromversorgung, Versorgung mit Hydraulikflüssigkeit, Defekt an elektrischen oder hydraulischen Leitungen) handeln. Beispielsweise kann eine elektrische Maschine der Antriebseinheit von einer zweiten elektrischen Maschine nicht mehr mit Strom versorgt werden. Es kann sich auch um einen externen Fehler handeln, z.B. eine unterbrochene Signalleitung zwischen einer Steuervorrichtung (z.B. Mikrocontroller) und der von dieser Steuervorrichtung gesteuerten Antriebseinheit. Auch ein technischer Defekt in dieser Steuervorrichtung selbst ist als ein Fehlerzustand denkbar.

Die Antriebseinheit ist vorzugsweise elektrisch oder hydraulisch ausgebildet. Im Falle einer elektrischen Antriebseinheit enthält diese insbesondere zwei elektrische Maschinen, welche durch einen Inverter miteinander gekoppelt sind. Vorzugsweise können beide Maschinen abhängig von ihrer Ansteuerung als Elektromotor oder als Generator arbeiten. Im Falle einer hydraulischen Antriebseinheit enthält diese vorzugsweise zwei miteinander hydraulisch verbundene hydraulische Maschinen.

Das Eingangsgetriebe ist z.B. als ein Planetengetriebe ausgebildet. Das Basisgetriebe kann eine Gangstufe oder mehrere Gangstufen aufweisen. Vorzugsweise handelt es sich bei dem Basisgetriebe um ein Schaltgetriebe, insbesondere Vier-GangSchaltgetriebe.

Vorzugsweise befindet sich die Sperrvorrichtung mittels einer Formschlussverbindung in ihrer Sperrposition. Hierdurch können während des Not-Antriebsmodus Leistungsverluste innerhalb der Getriebeanordnung vermieden werden.

Um die Sperrvorrichtung technisch einfach und kostengünstig zu halten, weist diese vorzugsweise eine etwa in Radialrichtung der Antriebswelle bewegliche Sperrnase auf, welche mit einer an der Antriebswelle oder an der Antriebsverbindung angeordneten Sperrnut zusammenwirkt. Insbesondere entsteht bei diesem Zusammenwirken eine mechanisch stabile Formschlussverbindung zwischen der Sperrnase und der Sperrnut.

Eine stabile Blockierposition der zweiten Eingangswelle wird unterstützt, indem die vorgenannte Sperrnase vorzugsweise durch die Federkraft eines Federelementes beaufschlagt in Richtung der Sperrnut ausgerichtet ist. Dies erleichtert ein reversibles Eingreifen der Sperrnase in die Sperrnut. Hierbei kann das Federelement zeitlich vor der Überführung der Sperrvorrichtung in ihre Sperrposition bereits entsprechend vorgespannt sein. Der reversible Eingriff gewährleistet, dass die Sperrvorrichtung nach einem behobenen Fehlerzustand wieder in ihre Ausgangslage überführt werden kann.

In einer weiteren bevorzugten Ausführungsform liegt die Sperrvorrichtung mittels einer Reibschlussverbindung in ihrer Sperrposition ein. Vorzugsweise ist diese Reibschlussverbindung bzw. die Sperrvorrichtung nach Art einer Reibbremse realisiert. Hierdurch wird ein reibschlüssiges Blockieren der Antriebswelle und der mit ihr in Antriebsverbindung stehenden zweiten Eingangswelle des Eingangsgetriebes erzielt.

Vorzugsweise ist die Sperrvorrichtung manuell in ihre Sperrposition überführbar. Der Fahrer oder Benutzer des Fahrzeugs kann dann durch einen manuellen Eingriff individuell und bedarfsweise einen Not-Fahrbetrieb realisieren.

Alternativ kann eine automatische Überführung der Sperrvorrichtung in ihre Sperrposition vorgesehen sein. Hierzu ist insbesondere eine Steuereinheit vorgesehen, welche bei Detektion bzw. Erkennung eines Fehlerzustandes die Sperrvorrichtung automatisch ansteuert.

Für eine effiziente Blockierfunktion bezüglich der zweiten Eingangswelle wirkt die Sperrvorrichtung vorzugsweise auf die Antriebswelle oder alternativ auf die Antriebsverbindung zwischen der Antriebswelle und der zweiten Eingangswelle ein.

Vorzugsweise ist an der Antriebswelle ein Sperrrad drehfest angeordnet, welches mindestens eine Sperrnut, z.B. eine Außenverzahnung, aufweist. Dies unterstützt einen mechanisch stabilen und technisch einfachen Aufbau der Sperrvorrichtung.

Alternativ kann auch kostensparend eine Außenverzahnung eines Zahnrades der Antriebsverbindung zwischen Antriebswelle und zweiter Eingangswelle als Sperrrad genutzt werden. Diese Variante lässt sich besonders einfach realisieren, wenn die Antriebsverbindung ohnehin eine Zahnradpaarung aufweist.

In einer bevorzugten Ausführungsform ist die zweite Eingangswelle als eine Hohlwelle ausgebildet, welche koaxial zu der ersten Eingangswelle angeordnet ist und hierdurch einen bewährten Getriebeaufbau unterstützt.

Die Getriebeanordnung lässt sich vorteilhaft in Fahrzeuge einbauen. Insbesondere lässt sie sich bei Nutzfahrzeugen, wie etwa Baumaschinen oder landwirtschaftlichen Arbeitsfahrzeugen, z.B. Traktoren einsetzen.

Die erfindungsgemäße Getriebeanordnung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Darstellung der erfindungsgemäßen Getriebeanordnung,
- Fig. 2: eine Sperrvorrichtung gemäß Detail II in Fig. 1 in einer ersten Ausführungsform, und
- Fig. 3: die Sperrvorrichtung gemäß Detail II in Fig. 1 in einer weiteren Ausführungsform.

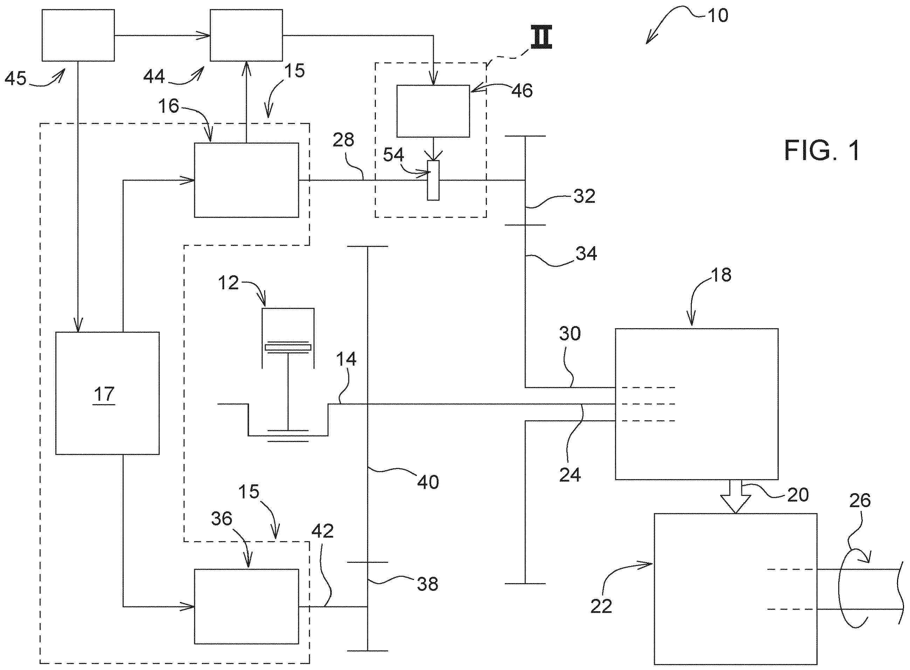

Fig. 1 zeigt schematisch eine Getriebeanordnung 10. Sie ist in ein hier nicht dargestelltes Fahrzeug, z.B. in einen Traktor, eingebaut, dessen Verbrennungsmotor 12 und zugeordnete Kurbelwelle 14 schematisch dargestellt sind.

Die Getriebeanordnung 10 enthält ein elektrisches Getriebe mit einer elektrischen Antriebseinheit 15, einem Eingangsgetriebe 18 und einem dem Eingangsgetriebe 18 in Kraftflussrichtung 20 nachgeschalteten Basisgetriebe 22. Die Kurbelwelle 14 ist mit einer ersten Eingangswelle 24 des Eingangsgetriebes 18 gekoppelt, so dass an der ersten Eingangswelle 24 eine Drehzahl des Verbrennungsmotors 12 bereitgestellt wird. Das Basisgetriebe 22 weist eine Ausgangswelle 26 auf, welche mechanische Energie an andere Komponenten des Fahrzeugs überträgt. Beispielsweise ist die Ausgangswelle 26 als eine Differential-Antriebswelle für den Antrieb einer Radachse des Fahrzeugs ausgebildet.

Die elektrische Antriebseinheit 15 enthält insbesondere zwei elektrische Maschinen 16, 36 und einen Inverter 17. Die Antriebseinheit 15 wird von einer Steuervorrichtung 45 gesteuert, indem letztere den Inverter 17 ansteuert. Abhängig von den Steuersignalen des Inverters 17 können die Maschinen 16, 36 jeweils entweder als Elektromotor oder als Generator betrieben werden. Vorzugsweise ist die Steuervorrichtung 45 ein Mikrocontroller. Sie kann bei einer entsprechenden Ausgestaltung als Steuerung für die gesamte Getriebeanordnung 10 verwendet werden.

Die Antriebseinheit 15 bzw. deren elektrische Maschine 16 treibt eine Antriebswelle 28 an, welche mit einer als Hohlwelle ausgebildeten zweiten Eingangswelle 30 des Eingangsgetriebes 18 in Antriebsverbindung steht. Diese Antriebsverbindung weist eine Zahnradpaarung mit einem ersten Zahnrad 32 und einem damit kämmenden zweiten Zahnrad 34 auf. Die beiden Eingangswellen 24, 30 sind koaxial zueinander angeordnet.

Die zwei elektrischen Maschinen 16, 36 stehen über den Inverter 17 in elektrischer Verbindung. Die Maschine 36 ist mit der Kurbelwelle 14 antriebsverbunden. Diese Antriebsverbindung weist eine Zahnradpaarung mit einem dritten Zahnrad 38 und einem damit kämmenden vierten Zahnrad 40 auf. Das dritte Zahnrad 38 ist drehfest bezüglich einer Antriebswelle 42 angeordnet, während das vierte Zahnrad 40 drehfest bezüglich der Kurbelwelle 14 angeordnet ist. Somit ist die Maschine 36 mit der ersten Eingangswelle 24 über ein festes Übersetzungsverhältnis antriebsverbunden.

Bei der Ausführungsform gemäß Fig. 1 detektiert eine Steuereinheit 44, ob ein Fehlerzustand vorliegt. Dies kann ein Defekt innerhalb der Antriebseinheit 15 sein, z.B. ein Fehler in einer der beiden elektrischen Maschinen 16, 36 oder ein Fehler des Inverters 17 oder ein Defekt einer Leitungsverbindung zwischen diesen Komponenten 16, 17, 36. Es kann sich auch um einen Defekt der Steuervorrichtung 45 handeln.

Bei einem Fehlerzustand kann die Antriebseinheit 15 der Antriebswelle 28 bzw. der zweiten Eingangswelle 30 keine definierte Drehzahl mehr aufprägen. In einem solchen Fall überführt die Steuereinheit 44 eine Sperrvorrichtung 46 in eine Sperrposition. Die Sperrvorrichtung 46 hat die Aufgabe, bei einem detektierten Fehlerzustand die zweite Eingangswelle 30 drehfest zu blockieren und hierdurch in einer Blockierposition zu halten.

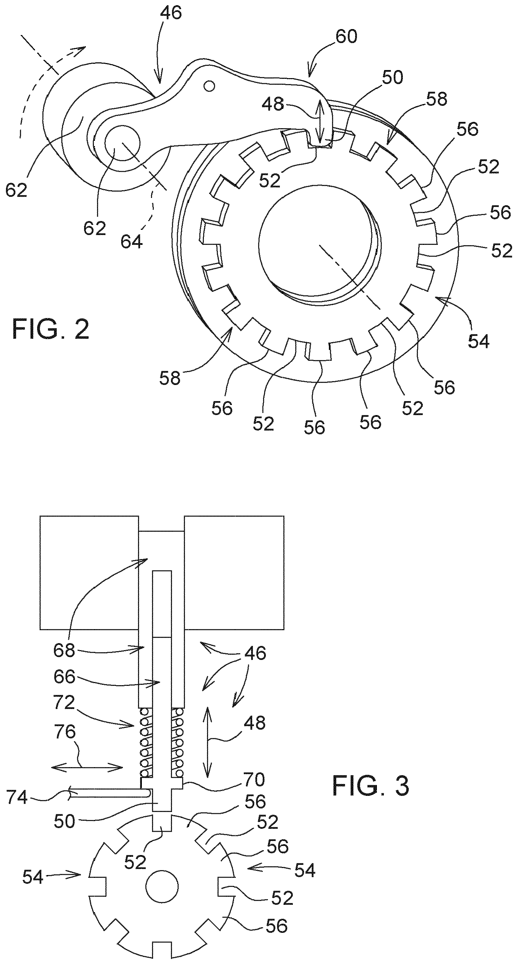

Um die zweite Eingangswelle 30 drehfest zu blockieren, sind unterschiedlich ausgestaltete Sperrvorrichtungen möglich. Bei bei der Ausführungsform gemäß Fig. 1 wirkt die Sperrvorrichtung 46 auf die Antriebswelle 28 ein. Hierzu weist die Sperrvorrichtung 46 eine etwa in Radialrichtung 48 bewegliche Sperrnase 50 auf, welche mit einer an der Antriebswelle 28 angeordneten Sperrnut 52 zusammenwirkt (Fig. 2). Die Sperrnut 52 ist Bestandteil eines Sperrrades 54, welches mit der Antriebswelle 28 drehfest verbunden ist. Das Sperrrad 54 weist eine Vielzahl von Sperrnuten 52 auf, welche jeweils durch die Zahnlücken benachbarter Zähne 56 einer Außenverzahnung 58 an dem Sperrrad 54 gebildet sind.

Die Sperrnase 50 bildet ein Freiende eines schwenkbeweglichen Sperrhebels 60. Letzterer ist beispielsweise drehfest mit einer Steuerwelle 62 verbunden, welche bezüglich einer Drehachse 64 drehbar gelagert ist. Vorzugsweise ist die Steuerwelle 62 dann für eine Drehbewegung bezüglich der Drehachse 64 entsprechend ansteuerbar. Alternativ kann die Steuerwelle 62 als drehfeste Achse ausgebildet sein, an der der Sperrhebel 60 drehbar gelagert ist. Die Drehbeweglichkeit der Steuerwelle 62 und/oder die Schwenkbeweglichkeit des Sperrhebels 60 in Richtung einer Sperrnut 52 wird vorzugsweise mittels der Federkraft eines oder mehrerer hier nicht dargestellter Federelemente unterstützt. Bei der Ausführungsform gemäß Fig. 2 ist beispielsweise eine bezüglich der Drehachse 64 fixierte und etwa in Radialrichtung 48 vorgespannte Schenkelfeder oder Torsionsfeder geeignet, wobei die Vorspannung den Sperrhebel 60 etwa entlang der Radialrichtung 48 in Richtung der Sperrnut 52 beaufschlagt. Durch Schwenken des Sperrhebels 46 entgegen der Federkraft des verwendeten Federelementes kann die Blockierposition der zweiten Eingangswelle 30 wieder aufgehoben werden.

Fig. 3 zeigt eine weitere Ausführungsform der Sperrvorrichtung 46. Hier ist die Sperrnase 50 als ein Freiende eines in Radialrichtung 48 beweglichen Sperrkolbens 66 ausgebildet. Der Sperrkolben 66 liegt bewegungsgeführt in einem Führungszylinder 68 ein. Zwischen dem Führungszylinder 68 und einem quer zum Sperrkolben 66 ausgerichteten Quersteg 70 stützt sich ein Federelement 72 ab, welches die Sperrnase 50 in Richtung einer zugeordneten Sperrnut 52 federkraftbeaufschlagt. Für einen reversiblen Eingriff der Sperrnase 50 in die Sperrnut 52 wird der Sperrkolben 66 und/oder der Führungszylinder 68 entlang der Radialrichtung 48 in Richtung der Sperrnut 52 bewegt. Die Bewegung des Sperrkolbens 66 kann beispielsweise durch ein Riegelelement 74 ausgelöst werden, wenn letzteres durch die Steuereinheit 44 entlang einer Querrichtung 76 bewegungsgesteuert und hierdurch von dem Quersteg 70 entfernt wird. Hierdurch kann die Sperrnase 50 federkraftbeaufschlagt automatisch in eine zugeordnete Sperrnut 52 eingreifen.

Es sei noch erwähnt, dass die in den Zeichnungen erkennbaren Details teilweise schematisch und nicht notwendigerweise maßstäblich dargestellt sind.

## Patentansprüche

1. Getriebeanordnung (10) für ein Fahrzeug, mit
- einem Eingangsgetriebe (18), welches eine erste Eingangswelle (24) aufweist,
- einem Basisgetriebe (22), welches in Kraftflussrichtung (20) dem Eingangsgetriebe (18) nachgeschaltet ist, und
- einer Antriebseinheit (15) zum Aufprägen einer Drehzahl auf eine Antriebswelle (28), welche mit einer zweiten Eingangswelle (30) des Eingangsgetriebes (18) in Antriebsverbindung steht,
wobei eine Sperrvorrichtung (46) vorgesehen ist, welche zur drehfesten Blockierung der zweiten Eingangswelle (30) in eine Sperrposition überführbar ist.

2. Getriebeanordnung nach Anspruch 1, **dadurch gekennzeichnet, dass** die Sperrvorrichtung (46) mittels einer Formschlussverbindung in ihrer Sperrposition ist.

3. Getriebeanordnung nach Anspruch 1, **dadurch gekennzeichnet, dass** die Sperrvorrichtung (46) mittels einer Reibschlussverbindung in ihrer Sperrposition ist.

4. Getriebeanordnung nach einem der vorhergehenden Ansprüche, **dadurch gekennzeichnet, dass** die Sperrvorrichtung (46) manuell in ihre Sperrposition überführbar ist.

5. Getriebeanordnung nach einem der vorhergehenden Ansprüche, **dadurch gekennzeichnet, dass** die Sperrvorrichtung (46) mittels einer Steuereinheit (44) in ihre Sperrposition überführbar ist.

6. Getriebeanordnung nach einem der vorhergehenden Ansprüche, **dadurch gekennzeichnet, dass** die Sperrvorrichtung (46) in ihrer Sperrposition auf die Antriebswelle (28) oder auf die Antriebsverbindung (32, 34) zwischen Antriebswelle (28) und zweiter Eingangswelle (30) einwirkt.

7. Getriebeanordnung nach einem der vorhergehenden Ansprüche, **dadurch gekennzeichnet, dass** die Antriebsverbindung zwischen Antriebswelle (28) und zweiter Eingangswelle (30) eine Zahnradpaarung (32, 34) aufweist.

8. Getriebeanordnung nach einem der vorhergehenden Ansprüche, **dadurch gekennzeichnet, dass** die zweite Eingangswelle (30) eine Hohlwelle ist, welche koaxial zu der ersten Eingangswelle (24) angeordnet ist.

9. Getriebeanordnung nach einem der vorhergehenden Ansprüche, **dadurch gekennzeichnet, dass** sie in einem landwirtschaftlichen Nutzfahrzeug verwendet wird.
